# EUROPEAN PATENT SPECIFICATION

(11) **EP 1 446 904 B1**
(45) Date of publication and mention of the grant of the patent: **23.05.2012**
(21) Application number: 02783391.2
(22) Date of filing: 19.11.2002
(51) Int. Cl.: H04L 29/06, H04W 28/18

(54) **RADIO BEARER SERVICE FOR IMS SERVICES**
FUNKTRÄGERDIENST FÜR IMS-DIENSTE
SERVICE SUPPORT RADIO DESTINE A DES SERVICES DE SOUS-SYSTEMES MULTIMEDIA (IMS)

(30) Priority: 23.11.2001 US 990331
(43) Date of publication of application: 18.08.2004
(73) Proprietor: Intellectual Ventures I LLC, Wilmington, DE 19808 (US)
(72) Inventor: SEBIRE, Benoist, FIN-02100 Espoo (FI)
(74) Representative: Small, Gary James
(86) International application number: PCT/IB2002/004825
(87) International publication number: WO 2003/044994

(56) References cited:
- US-A1- 2001 028 684
- US-A1- 2001 040 883
- LARZON L-A ET AL: "EFFICIENT TRANSPORT OF VOICE OVER IP OVER CELLULAR LINKS" GLOBECOM'00. 2000 IEEE GLOBAL TELECOMMUNICATIONS CONFERENCE. SAN FRANCISCO, CA, NOV. 27 - DEC. 1, 2000; [IEEE GLOBAL TELECOMMUNICATIONS CONFERENCE], NEW YORK, NY : IEEE, US, vol. 3, 27 November 2000 (2000-11-27), pages 1669-1676, XP001195714 ISBN: 978-0-7803-6452-3
- 3RD GENERATION PARTNERSHIP PROJECT: "3GPP TS 26.202 V5.0.0 (2001-03) Technical Specification Group Services and System Aspects;AMR wideband speech codec; Interface to Iu, Uu and Nb (Release 5)"[Online] March 2001 (2001-03), XP002479478 Sophia Antipolis - Valbonne - FRANCE Retrieved from the Internet: URL:http://www.3gpp.org/ftp/Specs/html-inf o/26202.htm> [retrieved on 2008-05-07]
- 3RD GENERATION PARTNERSHIP PROJECT: "3GPP TS 26.235 V5.0.0 (2001-06) Technical Specification Group Services and System Aspects; Packet Switched Conversational Multimedia Applications; Default Codecs (Release 5)"[Online] June 2001 (2001-06), XP002479479 Sophia Antipolis - Valbonne - FRANCE Retrieved from the Internet: URL:http://www.3gpp.org/ftp/Specs/html-inf o/26235.htm> [retrieved on 2008-04-28]
- KE LARZON LULEA UNIVERSITY OF TECHNOLOGY ET AL: "The UDP Lite Protocol <draft-larzon-udplite-04.txt>; draft-larzon-udplite-04.txt" TANDARD-WORKING-DRAFT, INTERNET ENGINEERING TASK FORCE, IETF, CH, no. 4, 23 February 2001 (2001-02-23), XP015004088 ISSN: 0000-0004
- LARZON ET AL.: 'UDP lite for real time multimedia applications' HP LABORATORIES BRISTOL, HPL-IRI-1999-001 April 1999, pages 1 - 5, XP002962105

## Description

### TECHNICAL FIELD

The present invention is directed to multimedia services. More particularly, the present Invention is directed to the use of multiple radio bearers for multimedia services.

### BACKGROUND ART

Third generation mobile communication systems include the Universal Mobile Telecommunication System (UMTS). Multimedia services will be supported by UMTS according to the 3^{rd} Generation Partnership Project (3GPP) specification.

For core networks (CN), the traditional circuit switched network will evolve into modern packet switched networks such as IP-based networks. Due to the merging of Internet and mobile applications, UMTS users are capable of accessing both telecom and Internet resources. But since IP networks historically provide best efforts service and are not multimedia oriented, Quality of Service (QoS) Is an Issue for the success of UMTS. To provide end users with perceptive QoS, network resources at various nodes may need to be optimally utilized. Therefore, resource management plays an important role in the future of UMTS services.

Lorzon L, et al: "Efficient Transport of Voice Over IP Over Cellular Links", GLOBECOM '00, IEE, US, Vol 3, 2000-11-27, shows that CRTP/UDP fails to deliver sufficient service quality at the error rates of a cost-efficient cellular system.

### DISCLOSURE OF INVENTION

Embodiments of the present invention may provide a method of transmitting a packet as set out in claim 1. According to one example it is provided a method that includes identifying a first part of a packet and a second part of the packet. The method may also include classifying one of the first part and the second part as being more important and classifying the other part as being less important. The more important part of the packet may be transmitted differently than the less important part of the packet.

The packet may be a UDP packet and the classifying may be based on data in a checksum coverage field of the UDP packet. On the other hand, the packet may be an RTP packet and the classifying may be based on data in a payload type field of the RTP packet.

The more important part of the packet may be transmitted using a first radio bearer and the less important part may be transmitted using a second radio bearer. The more important part may be transmitted using stronger channel coding than channel coding for the less important part.

The packet may be received from a multimedia network at a UMTS system. The first part and the second part of the packet may be transmitted over a radio access network to a mobile terminal.

Embodiments of the present invention may also provide a method of transmitting a packet as set out in claim 1. According to one example, this may include transmitting a first part of the packet across a radio access network using a first radio bearer and transmitting a second part of the packet across the radio access network using a second radio bearer.

Embodiments of the present invention may further provide a mobile terminal as set out in claim 11 and a base station as set out in claim 14. According to one example, it is provided an apparatus to communicate a packet across a radio access network. The apparatus may include structure to identify a first part of the packet and a second part of the packet. The structure may also transmit the first part of the packet across the radio access network using a first radio bearer and transmit the second part of the packet across the radio access network using a second radio bearer.

Other embodiments, objects, advantages and salient feature of the invention will become apparent from the following detailed description taken in conjunction with the annexed drawings, which disclose preferred embodiments of the present invention.

### BRIEF DESCRIPTION OF THE DRAWINGS

The foregoing and a better understanding of the present invention will become apparent from the following detailed description of example embodiments and the claims when read in connection with the accompanying drawings, all forming a part of the disclosure of this invention. While the foregoing and following written and illustrated disclosure focuses on disclosing example embodiments of the invention, it should be clearly understood that the same is by way of illustration and example only and that the invention is not limited thereto.

Arrangements and embodiments of the present invention may be described with reference to the following drawings in which like reference numerals represent like elements and wherein:
FIG. 1 is an example UMTS architecture;
FIG. 2 is a block diagram of an example mobile terminal;
FIG. 3 is an example bearer and QoS architecture;
FIG. 4 is an example UDP Lite header;
FIG. 5 is an example RTP header; and
FIG. 6 is a flowchart showing a method of transmitting UDP packets across a radio access network according to an example embodiment of the present invention.

### BEST MODE FOR CARRYING OUT THE INVENTION

In the following detailed description, like reference numerals and characters may be used to designate identical, corresponding or similar components in differing figure drawings. Further, arrangements may be shown in block diagram form in order to avoid obscuring the invention, and also in view of the fact that specifics with respect to implementation of such block diagram arrangements may be highly dependent upon the platform within which the present invention is to be implemented. That is, such specifics should be well within the purview of one skilled in the art. Where specific details (e.g., circuits, flowcharts) are set forth in order to describe example embodiments of the invention, it should be apparent to one skilled in the art that the invention can be practiced without, or with variation of, these specific details. Finally, it should be apparent that differing combinations of hardwired circuitry and software instructions may be used to implement embodiments of the present invention. That is, the present invention is not limited to any specific combination of hardware and software.

Embodiments of the present invention may be described with respect to a method or apparatus for communicating a packet between a mobile terminal (in a radio access network) and a multimedia network. This may include identifying a first part of a packet (such as a UDP packet or a RTP packet) and a second part of the packet. One of the first part of the second part may be classified as being more important. For UDP packets, this classification may be based on the checksum coverage field. For RTP packets, this classification may be based on the payload type field. The more important part of the packet may be transmitted (over the air interface of the radio access network) differently than the less important part of the packet.

An Internet Protocol (IP) Multimedia Subsystem (IMS) may utilize a packet switched (PS) domain to transport multimedia signaling and bearer traffic. From the mobile user perspective, a UMTS network is a network to access multimedia services of IMS. IP Multimedia Systems are discussed in each of the following: (1) 3GPP TS 22.228 entitled "Service Requirements for the IP Multimedia Core Network Subsystems"; (2) 3GPP TS 23.228 entitled "IP Multimedia Subsystems"; and (3) 3GPP TR 22.941 entitled "IP Based Multimedia Services Framework."

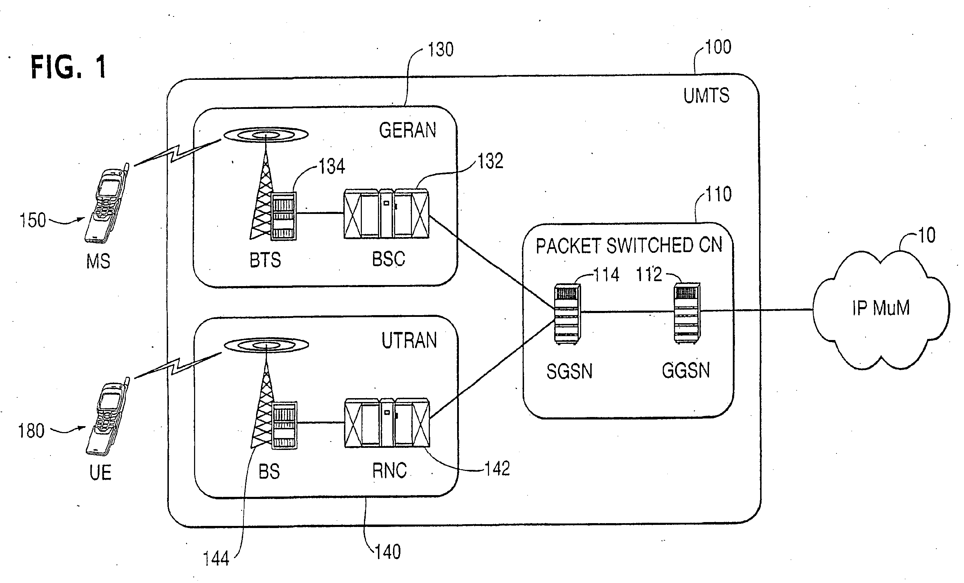

Fig. 1 illustrates a UMTS architecture according to one arrangement. Other arrangements are also possible. The arrangements shown in FIG. 1 will be used to describe embodiments of the present invention: Other architectures (including other radio access networks) may also be used in conjunction with embodiments of the present invention.

More specifically, Fig. 1 shows a UMTS 100 coupled to a multimedia network 10 (such as the internet, for example). The UMTS 100 may include a packet switched core network 110, a GSM Radio Access Network (GERAN) 130 and a UMTS Radio Access Network 140. The packet switched core network (CN) 110 may include a Gateway GPRS Support Node (GGSN) 112 coupled to the network 10 and a Serving GPRS Support Node (SGSN) 114 coupled to the GGSN 112. The GERAN 130 may include a base station controller 132 coupled to the SGSN 114 and a base transceiver station (BTS) 134 coupled to the BSC 132. The BTS 134 may communicate with a mobile station (MS) 150 in a well-known manner. Likewise, the UTRAN 140 may include a Radio Network Subsystem (RNC) 142 coupled to the SGSN 114 and a base station (BS) 144 coupled to the RNS 142. The BS 144 may communicate with user equipment (UE) 180 in a well-known manner. For ease of illustration, embodiments and arrangements may be described with respect to the MS 150 rather than the UE 180.

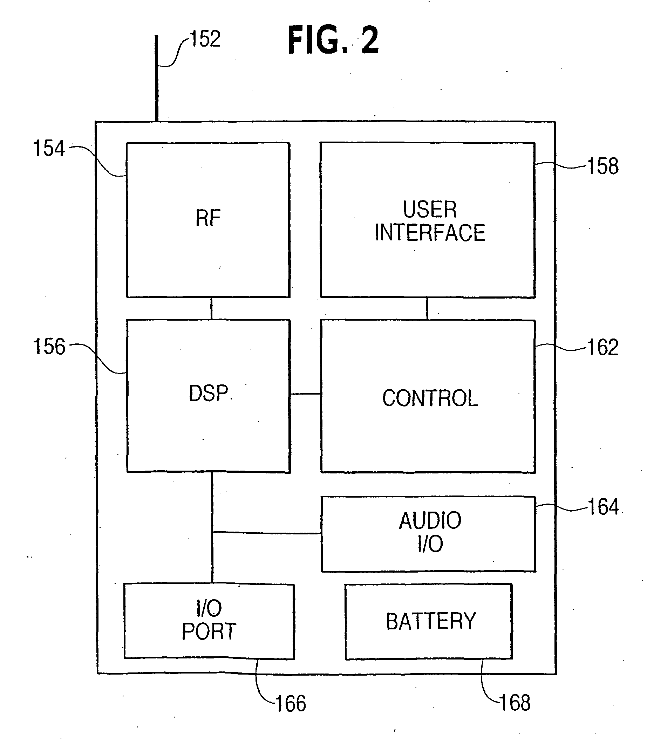

FIG. 2 illustrates an example mobile station (such as the MS 150) according to one arrangement. Other arrangements are also possible. The mobile station 150 may include an RF antenna 152; an RF (analog) transceiver circuit 154; a digital signal processing circuit 156; a user interface section 158 (including an LCD screen and keypad); a control circuit 162; an audio interface 164 (including a loud speaker and a microphone); an input/output port for digital data 166; and a battery 168.

In use, the digital signal processor circuit 156 may operate in one of several different modes under control of the control circuit 162 to selectively interconnect with the input/output port 166 or the audio interface 164 with the RF transceiver circuit 154 to set up either a voice or a data communication session. The digital signal processing circuit 156 may perform data formatting (e.g. into packets, ATM cells or a TDM bit stream and into a frame structure); data encryption; redundancy reduction encoding and decoding; and other well-known functions.

The RF transceiver circuit 154 may receive the output bit stream from the digital signal processing circuit 156 and modulate the output bit stream onto an RF channel including, for example, one or more time slots on one or more frequency carriers or one or more codes in a CDMA system.

IMS services available through UMTS (i.e., both GERAN and UTRAN) may include IMS Basic Multimedia Service, IMS Basic Voice Service and IMS Videophone Service, for example. Other services are also possible.

Subscribers to the IMS Basic Multimedia Services may be able to address, access and present in their terminals (such as the MS 150 and/or the UE 180) different types of multimedia objects. The media types may include real-time voice, text, and video. The use of the different media may depend on the capabilities of the user's device and the supporting networks. This may include the following: audio download, video download, audio streaming, video streaming, general data files, text messaging (e.g. SMS), emails, general web browsing and multi-media messaging

Subscribers to the IMS Basic Voice Service may be able to make and receive conversational class voice calls via the IMS to/from all types of network (within IMS, GSM, PSTN, etc).

Subscribers to the IMS Videophone Service may be able to make and receive conversational class videophone calls if the user devices (such as the MS 150) can support the video component and compatible codecs and all the networks used by the call, end to end, are capable of supporting it. The Videophone Service may also provide the same capabilities as the Voice Service.

QoS is the collective effect of service performances that determines the degree of satisfaction of a user of a service. The end user may decide whether he is satisfied with the provided QoS or not. The end-to-end Quality of Service (QoS) requirements may need to be met everywhere in the network. Thus, every entity of the network (and in particular the radio access network) may contribute to fulfill the QoS requirements.

A QoS architecture (such as a UMTS bearer service layered architecture) may be defined in order to ensure the end-to-end QoS requirements. QoS requirements are discussed in 3GPP TS 23.107 entitled "QoS Concept and Architecture" and in 3GPP TS 23.207 entitled "End-to-End QoS Concept and Architecture," .

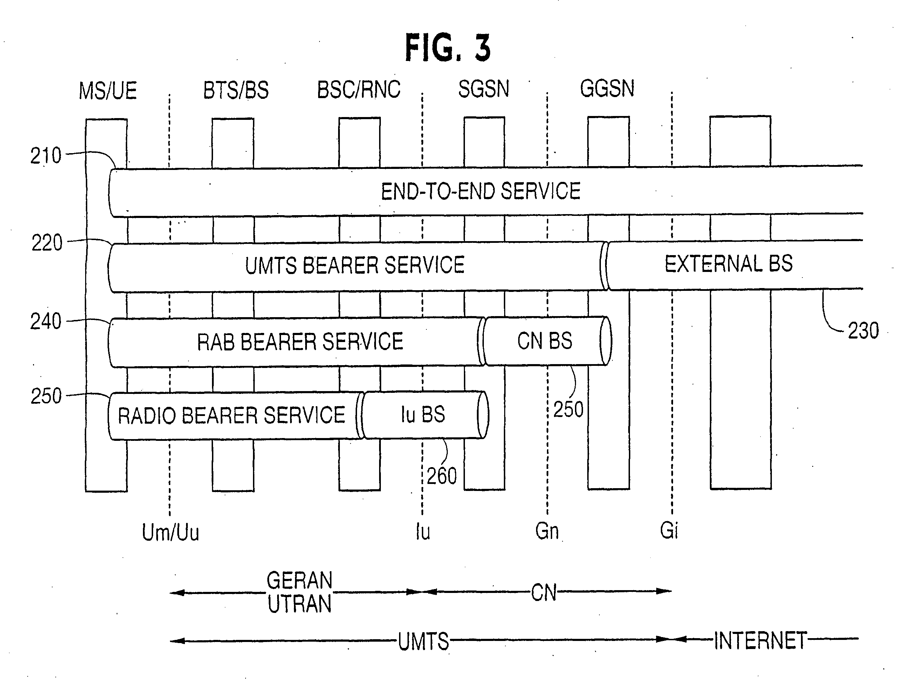

Fig. 3 illustrates one example bearer and QoS architecture. Other types of bearer and QoS architectures are also possible. Fig. 3 shows the different hierarchies of services. By introducing different hierarchies of services, the QoS architecture allows the QoS to be controlled at different levels, and within different elements along the transmission chain. Every element should fulfill the QoS requirements since it only takes one faulty element to jeopardize all of the QoS. As is well known in the art, a bearer is a service providing QoS between two defined points. More specifically, a bearer service is a type of telecommunication service that provides the capability of transmission of signals between access points. The characterization of a bearer service may be made by using a set of end-to-end characteristics with requirements on QoS, which distinguishes it from other bearer services (e.g., data rate, delay, information loss). Particular values are assigned to each characteristic when a given bearer service is described and defined. The bearer services are negotiable and may be used flexibly by applications.

An end-to-end QoS service 210 may be ensured by two services, namely an external bearer service 230 and a UMTS bearer service 220. The external bearer service 230 may manage the QoS within an external networks (such as the internet) and the UMTS bearer service 220 may contain mechanisms to allocate QoS over the UMTS network (such as the UMTS 100). Both the external bearer service 230 and the UMTS bearer service 220 should fulfill the QoS requirements in order to guarantee the end-to-end QoS.

The UMTS 100 may act as an infrastructure allowing services to be provided, and maintained while the terminal (such as the MS 150) moves and hides from the IP multimedia subsystem (such as the network 10). As further shown in Fig. 3, the UMTS bearer service 220 may be split into two services, namely a radio access bearer (RAB) service 240 and a core network bearer service (CN BS) 250. Both the RAB service 240 and the CN BS service 250 may reflect the optimized way to realize the UMTS bearer service 220 over a cellular network topology. The RAB bearer service 240 may be split into two services, namely a radio bearer (RB) service 250 and a lu bearer service 260.

A split of the RAB bearer service 240 allows the CN 110 to be independent from the radio access technology used by the RAN (i.e., the GERAN 130 and/or the UTRAN 140). The radio access network may create and maintain radio access bearers (RAB) for communication between the MS 150 (or the UE 180) and the CN 110. The RAB may give the CN 110 the illusion of a fixed communication, which thereby relieves the CN 110 of radio related aspects. The RAN and the CN 110 may map the end-to-end QoS requirements over the lu interface (i.e., the lu bearer services 260), while the RAN may only satisfy the QoS requirements over the radio path (Uu/Um) with the radio bearer service 250.

As will be described, embodiments of the present invention may utilize the information contained in UDP headers (or RTP headers) in order to optimize the radio bearer service (such as the radio bearer service 250) of the radio access network for real-time IMS services. Embodiments of the present invention will first be described with respect to UDP headers followed by RTP headers.

Embodiments of the present invention may utilize headers in accordance with the UDP Lite Protocol. UDP Lite is described in the IETF Draft entitled "The UDP Lite Protocol," The UDP Lite Protocol is similar to UDP, but is directed toward applications that can handle a partially damaged payload in lossy network environments. UDP is described in RFC 768 entitled "The User Datagram Protocol" (at http://www.ietf.org/rfc/rfc0792.txt).

The UDP Lite header contains a checksum coverage field. The value stored in the checksum coverage field is the number of bytes (counting from the first byte of the UDP Lite header) that are covered by the checksum field. Stated differently, the checksum coverage field may act as an indication of a more important part of the UDP packet. The more important part of the UDP packet may be more protected in the channel coding for transmission to and from the MS 150. Stated differently, the radio access network may include structure (through software or hardware) to examine the checksum coverage field of the UDP Lite header in order to determine the more important part of the UDP packet. The more important part of the UDP packet may then receive better channel coding than the less important part (i.e., the part not within the checksum) when the UDP packet is transmitted to (or from) the MS 150.

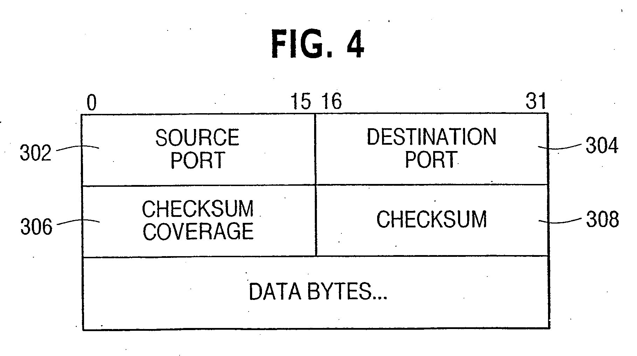

More specifically, Fig. 4 illustrates a UDP Lite header. The format of the UDP Lite header differs from a classic UDP header in that the UDP length field is replaced with a checksum coverage field. This can be done since information about the UDP Lite packet length can be found in the length field of the IP pseudo-header.

Fig. 4 shows a source port field 302 and a destination port field 304. These fields are defined in RFC-768. Fig. 4 also shows a checksum coverage field 306 and a checksum field 308. The checksum coverage field 306 may be the number of bytes (counting from the first byte of the UDP Lite header) that are covered by the checksum field 308. The UDP Lite header is included in the total of the checksum. Despite this requirement, the checksum coverage field 306 is expressed in bytes from the beginning of the UDP Lite header in order to preserve compatibility with classic UDP. An indication of zero in the checksum coverage field may indicate that the entire UDP Lite package is included in the checksum total. This means that the value of the checksum coverage field 306 is either zero or at least eight.

The checksum field 308 is a 16-bit one's complement of the one's complement sum of a pseudo-header of information from the IP header, the number of bytes specified by the checksum coverage field 306 (starting at the first byte in the UDP Lite header) virtually padded with zero bytes at the end (if necessary) to make a multiple of two bytes. If the computed checksum is zero, then it may be transmitted as all ones (the equivalent in one's complement arithmetic). The transmitted checksum is not all zeroes.

Embodiments of the present invention may utilize the checksum coverage field 306 of the UDP Lite header to split (or separate) the UDP packet into two parts and then transmit the split UDP packet over two different radio bearers. That is, the part of the UDP packet that is covered by the checksum may be carried (or transmitted) by a first radio bearer, and the part of the UDP packet that is not covered by the checksum may be carried (or transmitted) by a second radio bearer. The second radio bearer may have more relaxed requirements in terms of error protection (and/or error detection) than the first radio bearer. For instance, channel coding of the part associated with the second radio bearer may be lighter (i.e., the coding rate may be higher) than the channel coding associated with the first radio bearer. Such a split of the UDP packet may allow unequal error protection (UEP) to be used. This may also increase the spectral efficiency.

For downlink traffic from the RAN to the MS 150, the split of the UDP packet may be performed in the RAN (such as the GERAN 130 and the UTRAN 140) while the MS 150 merges the two radio bearers together in order to recover the original UDP packets. For uplink traffic from the MS 150 to the RAN, the split of the UDP packet may be performed in the MS 150 while the RAN merges the two radio bearers together. The two radio bearers may need to be synchronized in time.

Stated differently, embodiments of the present invention may utilize properties of the UDP Lite protocol in order to interpret the UDP packet as having two parts with one part being more important than the other part. Based on this information, unequal error protection may be provided between these two parts at the physical layer for transmission over the air interface (either to or from the MS 150, for example). Accordingly, embodiments of the present invention may identify two parts in the UDP packet based on the checksum coverage field of the UDP packet. The two parts may be classified by the level of importance with respect to whether or not it is covered by the checksum. The part on which the checksum is applied is defined as being more important than the other part on which no checksum applies. Further, unequal error protection may be applied at the physical layer between the two parts.

If the UDP Lite protocol is not available, then the split of the packet may be based on the payload type field (PT) of the RTP packet. RTP packets are described in RFC 1889 entitled "Real Time Protocol," http://www.ietf.org/rfc/rfc1889.txt.

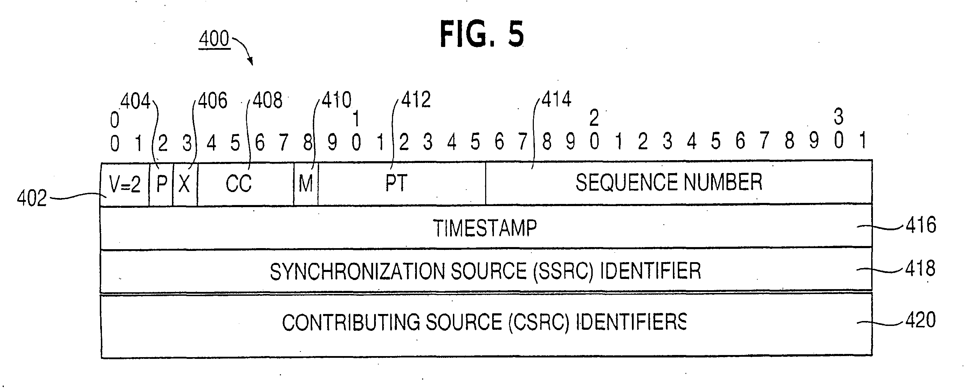

Fig. 5 illustrates a RTP header as described in RFC 1889. More specifically, the RTP header 400 includes a version field 402, a padding field 404, an extension field 406, a CSRC field 408, a marker field 410, a payload type (PT) field 412 and a sequence number field 414. The RTP also includes a timestamp field 416, a SSRC field 418 and a CSRC field 420. The PT field 412 identifies the RTP payload format, and consequently identifies the content of the RTP packet. This information may be used to split the RTP packet into as many parts as necessary and carry them over different radio bearers. In a similar manner as discussed above, one radio bearer may carry each part.

For example, the RTP payload format that is being defined for Adaptive Multi-Rate (AMR) may define a Frame Type indicator. This may tells the codec mode of the AMR frame that is carried. From this information, it is possible to deduce where different classes of bits are located within the RTP packet. One can then split the RTP packet into several parts and put them into different radio bearers based on their different classes. This may include the following: (1) RTP header and class 1A bit; (2) class 1 B bit; and (3) class 2 bits.

However, this technique may utilize apriori knowledge of the RTP payload format. The main problem is then whenever a newly introduced payload format is unknown within the entity that has to perform the split, then the split may not be possible.

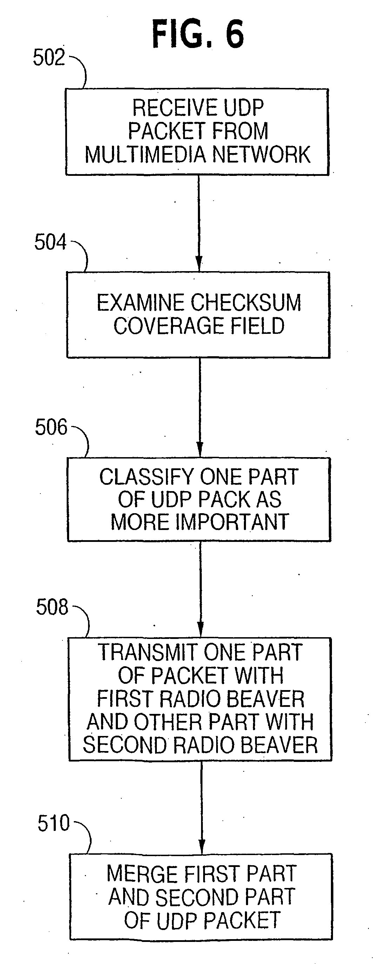

Fig. 6 is a flowchart showing operations to perform a method of transmitting a UDP packet from a multimedia network to a mobile terminal across a radio access network in accordance with an example embodiment of the present invention. Other operations and orders of operations are also within the scope of the present invention. More specifically, Fig. 6 shows a UMTS receiving the UDP packet from a multimedia network in block 502. In block 504, the UMTS (such as the GERAN or the UTRAN) may examine the checksum coverage field of the UDP packet. Based on this examination, in block 506 the UMTS may identify (or classify) one part of the UDP packet as being more important than another part of the UDP packet. In block 508, the UMTS may transmit the first part over a radio access network using a first radio bearer and may transmit the second part over the radio access network using a second radio bearer. In block 510, the mobile terminal may merge the first part and the second part of the UDP packet. The merging may be performed by the digital signal processing circuit 156 (Fig. 2), for example. Embodiments of the present invention are also applicable to the mobile terminal (such as the digital signal processing circuit 156) identifying the more important part of the packet and then transmitting the two parts across the radio access network to the UMTS using two radio bearers. The RAN may then merge the two parts.

Embodiments of the present invention have been described with respect to a as set out in claim 1. According to one example, this method of transmitting a packet as set out in claim 1. According to one example, this method may include transmitting a first part of the packet across a radio access network using a first radio bearer and transmitting a second part of the packet across the radio access network using a second radio bearer.

Embodiments or portions of embodiments of the present invention may be practiced as a software invention, implemented in the form of a machine-readable medium having stored thereon at least one sequence of instructions that, when executed, causes a machine to effect the invention. With respect to the term "machine", such term should be construed broadly as encompassing all types of machines, e.g., a non-exhaustive listing including: computing machines, non-computing machines, communication machines, etc. Similarly, which respect to the term "machine-readable medium", such term should be construed as encompassing a broad spectrum-of mediums, e.g., a non-exhaustive listing including: magnetic medium (floppy disks, hard disks, magnetic tape, etc.), optical medium (CD-ROMs, DVD-ROMs, etc.), etc.

Any reference in this specification to "one embodiment", "an embodiment", "example embodiment", etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments. Furthermore, for ease of understanding, certain method procedures may have been delineated as separate procedures; however, these separately delineated procedures should not be construed as necessarily order dependent in their performance. That is, some procedures may be able to be performed in an alternative ordering, simultaneously, etc.

## Claims

1. A method of transmitting a packet comprising:
determining a first part of said packet and a second part of said packet based on data in a checksum coverage field (306) of said packet (506), said data indicating the number of bytes that are covered by data in a checksum field (308) of said packet, wherein the first part of said packet is covered by the data in the checksum field and the second part of said packet is not covered by the data in the checksum field;
transmitting the first part of said packet between a mobile terminal (150, 180) and a base station (134, 144) using a first radio bearer (508); and
transmitting the second part of said packet between the mobile terminal (150, 180) and the base station (134, 144) using a second radio bearer (508) different than the first radio bearer (508).

2. The method of claim 1, further comprising classifying one of said first part and second part differently (506).

3. The method of claim 1, wherein:
said first and second parts are respectively transmitted with different protection against loss during transmission.

4. The method of claim 3, wherein said transmitting comprises:
transmitting said one part of the first and second parts using a stronger channel coding than channel coding for said other part.

5. The method of claim 1, comprising:
receiving said packet from a multimedia network (10).

6. The method of claim 5, wherein:
said packet is received at a UMTS system (100).

7. the method of claim 6, wherein:
said first part and said second part of said packet are transmitted to the mobile terminal (150, 180).

8. The method of claim 1, wherein said packet comprises:
a UDP packet.

9. The method of claim 1, wherein:
transmitting said first part comprises using a first type of channel coding,
transmitting said second part comprises using a second type of channel coding; and
said first type of channel coding is greater than said second type of channel coding.

10. The method of claim 1, wherein the base station is a base transceiver station (134).

11. A mobile terminal (150, 180) adapted to communicate a packet, said mobile terminal comprising:
means adapted for identifying (156, 162) a first part of said packet and a second part of said packet based on a checksum coverage field of said packet, said checksum coverage field indicating the number of bytes that are covered by data in a checksum field (308) of said packet, wherein the first part of said packet is covered by the data in the checksum field and the second part of said packet is not covered by the data in the checksum field; and
means adapted for transmitting (154, 152) said first part of said packet to a base station (134, 144) using a first radio bearer and for transmitting said second part of said packet to the base station (134, 144) using a second radio bearer different than the first radio bearer.

12. The mobile terminal of claim 11, wherein said packet comprises a UDP packet.

13. The mobile terminal of claim 11, wherein:
transmitting said first part comprises using a first type of channel coding, and
transmitting said second part comprises using a second type of channel coding, wherein said first type of channel coding is greater than said second type of channel coding.

14. A base station adapted to communicate a packet, said base station comprising:
means for identifying (156, 162) a first part of said packet and a second part of said packet based on a checksum coverage field (306) of said packet, said checksum coverage field indicating the number of bytes that are covered by data in a checksum field (308) of said packet, wherein the first part of said packet is covered by the data in the checksum field and the second part of said packet is not covered by the data in the checksum field; and
means for transmitting (154, 152) said first part of said packet to a mobile terminal (150, 180) using a first radio bearer and for transmitting said second part of said packet to the mobile terminal (150, 180) using a second radio bearer different than the first radio bearer.

## Patentansprüche

1. Verfahren zum Übertragen eines Pakets, umfassend:
Bestimmen eines ersten Teils des Pakets und eines zweiten Teils des Pakets auf der Basis von Daten in einem Prüfsummen-Abdeckungsfeld (306) des Pakets (506), wobei die Daten die Anzahl von Byte angeben, die durch Daten in einem Prüfsummenfeld (308) des Pakets abgedeckt werden, wobei der erste Teil des Pakets durch die Daten in dem Prüfsummenfeld abgedeckt wird und der zweite Teil des Pakets nicht durch die Daten in dem Prüfsummenfeld abgedeckt wird;
Übertragen des ersten Teils des Pakets zwischen einem mobilen Endgerät (150, 180) und einer Basisstation (134, 144) unter Verwendung eines ersten Funkträgers (508); und
Übertragen des zweiten Teils des Pakets zwischen dem mobilen Endgerät (150, 100) und der Basisstation (134, 144) unter Verwendung eines zweiten Funkträgers (508), der von dem ersten Funkträger (508) verschieden ist.

2. Verfahren nach Anspruch 1, das ferner umfasst, von dem ersten Teil und dem zweiten Teil einen anders zu klassifizieren (506).

3. Verfahren nach Anspruch 1, wobei
der erste und zweite Teil jeweils mit verschiedenem Schutz vor Verlust während der Übertragung übertragen werden.

4. Verfahren nach Anspruch 3, wobei das Übertragen Folgendes umfasst:
übertragen des einen Teils des ersten und zweiten Teils unter Verwendung einer stärkeren Kanalcodierung als Kanalcodierung für den anderen Teil.

5. Verfahren nach Anspruch 1, umfassend:
Empfangen des Pakets von einem Multimedia-Netz (10).

6. Verfahren nach Anspruch 5, wobei
das Paket in einem UMTS-System (100) empfangen wird.

7. Verfahren nach Anspruch 6, wobei
der erste Teil und der zweite Teil des Pakets zu dem mobilen Endgerät übertragen werden (150, 180).

8. Verfahren nach Anspruch 1, wobei das Paket Folgendes umfasst:
ein UDP-Paket.

9. Verfahren nach Anspruch 1, wobei
das Übertragen des ersten Teils die Verwendung einer ersten Art von Kanalcodierung umfasst,
das Übertragen des zweiten Teils die Verwendung einer zweiten Art von Kanalcodierung umfasst; und
die erste Art von Kanalcodierung größer als die zweite Art von Kanalcodierung ist.

10. Verfahren nach Anspruch 1, wobei die Basisstation eine Basissende-/-empfängerstation (134) ist.

11. Mobiles Endgerät (150, 180), das dafür ausgelegt ist, ein Paket zu übermitteln, wobei das mobile Endgerät Folgendes umfasst:
Mittel, die dafür ausgelegt sind, einen ersten Teil des Pakets und einen zweiten Teil des Pakets auf der Basis eines Prüfsummen-Abdeckungsfelds des Pakets zu identifizieren (156, 162), wobei das Prüfsummen-Abdeckungsfeld die Anzahl von Byte angibt, die durch Daten in einem Prüfsummenfeld (308) des Pakets abgedeckt werden, wobei der erste Teil des Pakets durch die Daten in dem Prüfsummenfeld abgedeckt wird und der zweite Teil des Pakets nicht durch die Daten in dem Prüfsummenfeld abgedeckt wird; und
Mittel, die dafür ausgelegt sind, den ersten Teil des Pakets unter Verwendung eines ersten Funkträgers zu einer Basisstation (134, 144) zu übertragen (154, 152) und den zweiten Teil des Pakets unter Verwendung eines zweiten Funkträgers, der von dem ersten Funkträger verschieden ist, zu der Basisstation (134, 144) zu übertragen.

12. Mobiles Endgerät nach Anspruch 11, wobei das Paket ein UDP-Paket umfasst.

13. Mobiles Endgerät nach Anspruch 11, wobei
das Übertragen des ersten Teils das Verwenden einer ersten Art von Kanalcodierung umfasst und
das Übertragen des zweiten Teils die Verwendung einer zweiten Art von Kanalcodierung umfasst, wobei die erste Art von Kanalcodierung größer als die zweite Art von Kanalcodierung ist.

14. Basisstation, die dafür ausgelegt ist, ein Paket zu übermitteln, wobei die Basisstation Folgendes umfasst:
Mittel zum Identifizieren (156, 162) eines ersten Teils des Pakets und eines zweiten Teils des Pakets auf der Basis von einem Prüfsummen-Abdeckungsfeld (306) des Pakets, wobei das Prüfsummen-Abdeckungsfeld die Anzahl von Byte angibt, die durch Daten in einem Prüfsummenfeld (308) des Pakets abgedeckt werden, wobei der erste Teil des Pakets durch die Daten in dem Prüfsummenfeld abgedeckt wird und der zweite Teil des Pakets nicht durch die Daten in dem Prüfsummenfeld abgedeckt wird; und
Mittel zum Übertragen (154, 152) des ersten Teils des Pakets zu einem mobilen Endgerät (150, 180) unter Verwendung eines ersten Funkträgers und zum Übertragen des zweiten Teils des Pakets zu dem mobilen Endgerät (150, 180) unter Verwendung eines zweiten Funkträgers, der von dem ersten Funkträger verschieden ist.

## Revendications

1. Procédé de transmission d'un paquet, comprenant les étapes suivantes :
identification d'une première partie dudit paquet et d'une deuxième partie dudit paquet en fonction de données dans un champ de couverture de somme de contrôle (306) dudit paquet (506), lesdites données indiquant le nombre d'octets couverts par des données dans un champ de somme de contrôlé (308) dudit paquet, laquelle première partie dudit paquet est couverte par les données dans le champ de somme de contrôle et laquelle deuxième partie dudit paquet n'est pas couverte par les données dans le champ de somme de contrôle ;
transmission de la première partie dudit paquet entre un terminal mobile (150, 180) et une station de base (134, 144) au moyen d'un premier support radio (508) ; et
transmission de la deuxième partie dudit paquet entre le terminal mobile (150, 180) et la station de base (134, 144) au moyen d'un deuxième support radio (508) différent du premier support radio (508).

2. Procédé selon la revendication 1, comprenant en outre l'étape de classement différent d'une desdites première et deuxième parties (506).

3. Procédé selon la revendication 1,
lesdites première et deuxième parties étant respectivement transmises avec une protection différente contre les pertes en cours de transmission.

4. Procédé selon la revendication 3, lesdites étapes de transmission comprenant l'étape suivante :
transmission d'une dite partie parmi lesdites première et deuxième parties au moyen d'un codage de canal plus fort que celui utilisé pour ladite autre partie.

5. Procédé selon la revendication 1, comprenant l'étape suivante :
réception dudit paquet depuis un réseau multimédia (10).

6. Procédé selon la revendication 5,
ledit paquet étant reçu au niveau d'un système UMTS (100).

7. Procédé selon la revendication 6,
ladite première partie et ladite deuxième partie dudit paquet étant transmises au terminal mobile (150, 180).

8. Procédé selon la revendication 1, ledit paquet comprenant :
un paquet UDP.

9. Procédé selon la revendication 1,
l'étape de transmission de ladite première partie comprenant l'étape d'utilisation d'un premier type de codage de canal ;
l'étape de transmission de ladite deuxième partie comprenant l'étape d'utilisation d'un deuxième type de codage de canal ; et
ledit premier type de codage de canal étant plus fort que ledit deuxième type de codage de canal.

10. Procédé selon la revendication 1, la station de base étant une station de base (ametteur-récepteur) (134).

11. Terminal mobile (150, 180), conçu pour communiquer un paquet, ledit terminal mobile comprenant :
des moyens d'identification (156, 162) d'une première partie dudit paquet et d'une deuxième partie dudit paquet en fonction d'un champ de couverture de somme de contrôle dudit paquet, ledit champ de couverture de somme de contrôle indiquant le nombre d'octets couverts par des données dans un champ de somme de contrôle (308) dudit paquet, laquelle première partie dudit paquet est couverte par les données dans le champ de somme de contrôle et laquelle deuxième partie dudit paquet n'est pas couverte par les données dans le champ de somme de contrôle ; et
des moyens de transmission (154, 152) de ladite première partie dudit paquet à une station de base (134, 144) au moyen d'un premier support radio (508) et de transmission de ladite deuxième partie dudit paquet à la station de base (134, 144) au moyen d'un deuxième support radio différent du premier support radio.

12. Terminal mobile selon la revendication 11, ledit paquet comprenant un paquet UDP.

13. Terminal mobile selon la revendication 11,
la transmission de ladite première partie comprenant l'utilisation d'un premier type de codage de canal, et
la transmission de ladite deuxième partie comprenant l'utilisation d'un deuxième type de codage de canal,
ledit premier type de codage de canal étant plus fort que ledit deuxième type de codage de canal.

14. Station de base, conçue pour communiquer un paquet, ladite station de base comprenant :
des moyens d'identification (156, 162) d'une première partie dudit paquet et d'une deuxième partie dudit paquet en fonction d'un champ de couverture de somme de contrôle (306) dudit paquet, ledit champ de couverture de somme de contrôle indiquant le nombre d'octets couverts par des données dans un champ de somme de contrôle (308) dudit paquet, laquelle première partie dudit paquet est couverte par les données dans le champ de somme de contrôle et laquelle deuxième partie dudit paquet n'est pas couverte par les données dans le champ de somme de contrôle : et
des moyens de transmission (154, 152) de ladite première partie dudit paquet à un terminal mobile (150, 180) au moyen d'un premier support radio et de transmission de ladite deuxième partie dudit paquet au terminal mobile (150, 180) au moyen d'un deuxième support radio différent du premier support radio.
